Europäisches Patentamt

European Patent Office

Office européen des brevets

(11) Publication number : **0 447 341 A2**

# EUROPEAN PATENT APPLICATION

(21) Application number : **91480021.4**

(51) Int. Cl.$^5$ : **G06F 15/21**

(22) Date of filing : **05.02.91**

(30) Priority : **15.03.90 US 494059**

(43) Date of publication of application :
**18.09.91 Bulletin 91/38**

(84) Designated Contracting States :
**DE FR GB**

(71) Applicant : **International Business Machines Corporation**
**Old Orchard Road**
**Armonk, N.Y. 10504 (US)**

(72) Inventor : **Williams, Marvin L.**
**1152 Settlers Way**
**Lewisville, TX 75067 (US)**

(74) Representative : **Tubiana, Max**
**Compagnie IBM France Département de Propriété Intellectuelle**
**F-06610 La Gaude (FR)**

(54) **Method for document distribution control in a data processing system.**

(57)   A method for controlling document distribution in a data processing system. A distribution profile object is created and associated with each document for which control of distribution is desired. Within each distribution profile object are listed the addressees for which a document is intended in the order in which those specified addressees will receive the document. In one embodiment of the present invention, the distribution profile object also includes a specified action with regard to the document in question which shall be accomplished upon the completion of the specified distribution sequence. Additionally, the distribution profile object may include instructions on how to resolve deadlock situations in which the specified distribution sequence may not be accomplished. In this manner the method of the present invention permits a user to specify the order in which supervisory personnel or others must authorize a document for a selected action and a mechanism for determining whether or not the selected sequence has been followed.

EP 0 447 341 A2

# METHOD FOR DOCUMENT DISTRIBUTION CONTROL IN A DATA PROCESSING SYSTEM

## BACKGROUND OF THE INVENTION

### Technical Field

The present invention relates in general to the field of data processing systems and in particular to the field of document distribution within a data processing system. Still more particularly, the present invention relates to a method for automatically controlling the sequence of distribution of a document within a data processing system.

### Description of the Related Art

Document distribution via a data processing system is well known in the prior art. Electronic mail and other message techniques have existed for many years. These systems permit documents, memoranda and the like to be rapidly and efficiently distributed to one or more individuals within a distributed data processing system.

For example, the International Standards Organization (ISO) has developed and defined a standard definition for an electronic mail system (MOTIS). Similarly, the Professional Office System (PROFS) and the Distributed Office Support System (DISOSS) by International Business Machines Corporation may both be utilized to distribute messages and documents throughout a distributed electronic network. Additionally, the International Consultative Committee for Telegraph and Telephone (CCITT) has also developed a standard definition for an electronic mail system. This definition is known as X.400. All of these systems provide an excellent method of distributing electronic documents or messages; however, none of these systems permit a user to specify the order of distribution for a document to multiple addresses.

In view of the above, it should be readily apparent to those ordinarily skilled in the art that a method is needed whereby the order of distribution of documents or the like through a distributed data processing system may be specified in order to ensure that such documents are distributed to selected individuals in a specified sequence.

## SUMMARY OF THE INVENTION

It is therefore one object of the present invention to provide an improved data processing system.

It is another object of the present invention to provide an improved document distribution system for use within a data processing system.

It is yet another object of the present invention to provide an improved document distribution system for use within a data processing system which permits the automatic control of the sequence of distribution of a document

The foregoing objects are achieved as is now described. The method of the present invention may be utilized to control the distribution of a document in a data processing system by creating a distribution profile object and associating that object with the distribution profile for each document for which control is desired. Within the distribution profile are preferably listed the addressees for which a document is intended, in the order in which those specified addressees will receive the document. In one embodiment of the present invention, the distribution profile also includes a specified action, with regard to the document in question, which shall be accomplished upon the completion of the specified distribution sequence. Additionally, the distribution profile may also include instructions on how to resolve deadlock situations in which the specified distribution sequence may not be accomplished. In this manner the method of the present invention permits a user to specify the order in which supervisory personnel or others must authorize a document for a selected action and a mechanism for determining whether or not the selected sequence has been followed.

## BRIEF DESCRIPTION OF THE DRAWINGS

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:

Figure 1 is a pictorial representation of a distributed data processing system which may be utilized to implement the method of the present invention;

Figure 2 is a block diagram depicting a document distribution in accordance with the method of the present invention;

Figure 3 a graphic representation of a distribution profile created in accordance with the method of the present invention;

Figure 4 is a pictorial representation of a computer display screen illustrating a distribution profile created in accordance with the method of the present invention;

Figure 5 is a high level flow chart depicting the creation of a distribution profile in accordance with the method of the present invention; and

Figure 6 is a high level flow chart depicting the distribution of a document in accordance with the method of the present invention.

## DETAILED DESCRIPTION OF THE PREFERRED EMBODIMENT

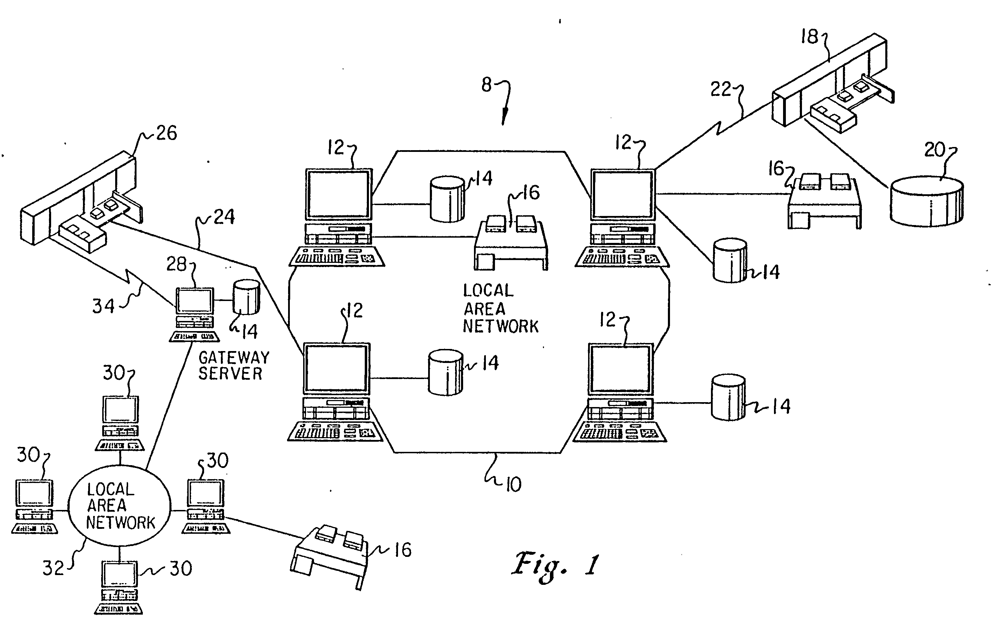

With reference now to the figures, and in particular with reference to Figure 1, there is depicted a pictorial representation of a data processing system 8 which may be utilized to implement the method of the present invention. As may be seen, data processing system 8 may include a plurality of networks, such as Local Area Networks (LAN) 10 and 32, each of which preferably includes a plurality of individual computers 12 and 30, respectively. Of course, those skilled in the art will appreciate that a plurality of Intelligent Work Stations (IWS) coupled to a host processor may be utilized for each such network.

As is common in such data processing systems, each individual computer may be coupled to a storage device 14 and/or a printer/output device 16. One or more such storage devices 14 may be utilized, in accordance with the method of the present invention, to store documents or resource objects which may be periodically accessed and distributed by any user within data processing system 8. In a manner well known in the prior art, each such document or resource object stored within a storage device 14 may be freely interchanged throughout data processing system 8 by transferring a document to a user at an individual computer 12 or 32, for example.

Still referring to Figure 1, it may be seen that data processing network 8 may also include multiple main frame computers, such as main frame computer 18, which may be preferably coupled to Local Area Network (LAN) 10 by means of communications link 22. Main frame computer 18 may also be coupled to a storage device 20 which may serve as remote storage for Local Area Network (LAN) 10. Similarly, Local Area Network (LAN) 10 may be coupled via communications link 24 through a subsystem control unit/communications controller 26 and communications link 34 to a gateway server 28. Gateway server 28 is preferably an individual computer or Intelligent Work Station (IWS) which serves to link Local Area Network (LAN) 32 to Local Area Network (LAN) 10.

As discussed above with respect to Local Area Network (LAN) 32 and Local Area Network (LAN) 10, a plurality of documents or resource objects may be stored within storage device 20 and controlled or distributed by main frame computer 18, as Resource Manager or Library Service for the resource objects thus stored. Of course, those skilled in the art will appreciate that main frame computer 18 may be located a great geographic distance from Local Area Network (LAN) 10 and similarly Local Area Network (LAN) 10 may be located a substantial distance from Local Area Network (LAN) 32. That is, Local Area Network (LAN) 32 may be located in California while Local Area Network (LAN) 10 may be located within Texas and main frame computer 18 may be located in New York.

In known prior art systems of this type it is common for a user in one area of distributed data processing system 8 to distribute a document or resource object within another portion of distributed data processing system 8. This interchange of a document or resource object from one portion of distributed data processing system 8 to another portion of distributed data processing system 8 is generally accomplished, in the prior art, by simultaneously transferring electronic duplicates of the document or resource object in question to each addressee within a distribution command. The manner and sequence in which individual addressees will receive the document in question is dictated purely by the structure of distributed data processing system 8. That is, those addressees located in an isolated portion of data processing system 8 will generally receive a distributed document at a later time than those addressees situated near the distribution point. This, as those ordinarily skilled in the art will appreciate, is generally due to the loss of time which is associated with transmitting a document from one section of distributed data processing system 8 to another. As discussed above, this distribution system works well for those documents for which it is desired to rapidly distribute the document to each person within the addressee list; however, in those instances in which a specific sequence of distribution is required, this system is not efficient. In those instances in which a specific sequence of distribution is required it is often necessary to distribute the document to a single addressee and upon receiving confirmation that that addressee has received and approved the document for further distribution, subsequently distribute the document to a second or third addressee.

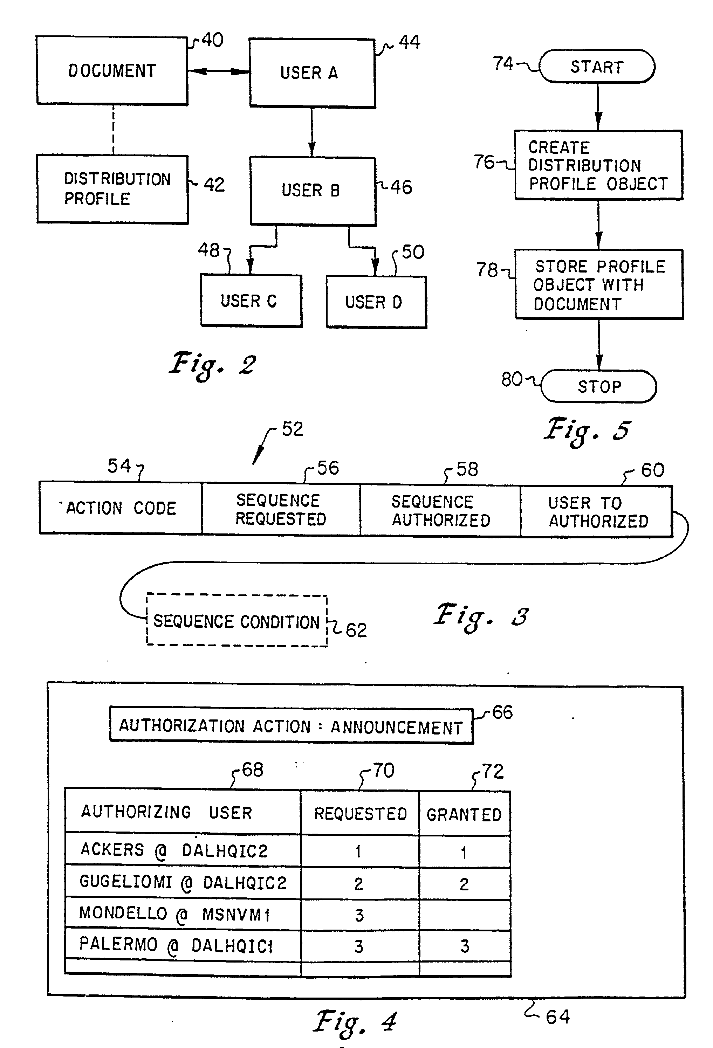

Referring now to Figure 2, there is depicted a block diagram illustrating a document distribution in accordance with the method of the present invention. As may be seen, a document 40 is depicted. Document 40 is preferably a document or other resource object which is stored at some location within distributed data processing system 8 (see Figure 1). In accordance with the method of the present invention, a distribution profile 42 has been created and is associated with document 40. Distribution profile 42 will contain a distribution profile object which will preferably specify the order in which document 40 is to be distributed throughout distributed data processing system 8. As is illustrated, document 40 is first distributed to or originates in the possession of user A 44. After reviewing document 40 and proving further authorization, user A 44 is then free to distributed document 40 to user B 46. Similarly, after user B 46 has approved document 40 for further distribution the document may be distributed to user C 48 and user D 50. In this manner, the sequence of distribution of document 40 through a number of users within distributed data processing system 8 may be efficiently and rapidly accomplished.

With reference now to Figure 3, there is depicted graphic representation of a distribution profile object 52 which has been created in accordance with the method of the present invention. As is illustrated, distribution profile object 52 includes a plurality of sections, not all of which are necessary to implement the method of the present invention. Section 54, preferably contains a numeric value which defines the type of action which is being requested for authorization after each party within the distribution sequence has approved. For example, the action requested may signify that the originator of the distribution desires approval to distribute, create, or destroy the document in question. By utilizing a numeric field within section 54 any user within distributed data processing system 8 may create specific codes to represent desired actions, which may be specialized for specific implementations.

Next, section 56 of distribution profile object 52 contains a numeric value indicating the sequence which has been requested. This field is preferably utilized to specify the selected order in which addressees will receive and authorize actions with regard to the document in question. This field may be created and subsequently modified, in a preferred embodiment of the present invention, by only those entities within distributed data processing system 8 who have authority to define such sequences.

Next, still referring to distribution profile object 52, section 58 is utilized to contain a numeric field indicating the sequence in which a particular action or document has been authorized. A numeric value placed within this section of distribution profile object 52 may be utilized to signify that a particular individual listed within the sequence requested within section 56 has authorized the action specified. Section 60 of distribution profile object 52 may be utilized to indicate the name of the individual addressee at each segment of the requested sequence. This may be utilized, in one embodiment of the present invention to provide a graphic indication of the individual which corresponds to the numeric value contained within section 56 of distribution profile object 52.

Finally, an optional section 62 of distribution profile object 52 may be utilized to indicate what action should be taken in the event the sequence condition present for a particular document will not permit the requested sequence to be accomplished. Such situations, commonly referred to as a "deadlock" situation, may arise when a document in the possession of a first user is specified for distribution initiating with a different user. Those skilled in the art will appreciate that sequence condition section 62 of distribution profile object 52 may be utilized to specify how such problems are to be resolved or to whom an error message should be sent in the event of such a situation.

Referring now to Figure 4, there is depicted a pictorial representation of a computer display screen 64 which illustrates a distribution profile object created in accordance with the method of the present invention. As is illustrated, authorization action section 66 may be utilized to graphically indicate the particular action for which authorization is requested, with regard to a particular document. In the depicted example of Figure 4, the authorization action requested is an announcement to the public. Thereafter, additional columns within computer display screen 64 are utilized to graphically indicate the authorizing user (column 68), the order in which that user has been requested to authorize the action (column 70), and an indication of whether or not authority has been granted by the user in question (column 72). Upon reference to the foregoing those skilled in the art will appreciate that display sections 66, 68, 70, and 72 correspond to sections 54, 60, 56, and 58 of Figure 3, respectively.

In the example depicted within Figure 4, the network addresses are displayed for each user who has been requested to authorize the announcement of a particular document. As illustrated, the user in question has defined an action which represents announcing the document to the public and specified that initial authorization was required from the individual named Ackers. By referring to the Display contained within Figure 4, it may be seen that Ackers' authorization was granted and thereafter Gugeliomi was the next required individual from whom authorization was required. After Gugeliomi granted authorization, the remaining two individuals, Mondello and Palermo, both are listed as a level three request within column 70 and therefore either individual may grant approval for authorization to announce the document in question.

In the foregoing manner, those ordinarily skilled in the art will appreciate that by creating a distribution profile in accordance with the method of the present invention a user within a data processing system may clearly specify the individuals to whom a document will be distributed and the sequence in which that distribution will take place. Further, an action with regard to that document may also be specified for execution after all authorizations have been received in the specified order.

With reference now to Figure 5, there is depicted a high level flow chart which illustrates the creation of a distribution profile object in accordance with the method of the present invention. As may be seen, the process begins at block 74 and thereafter passes to block 76 which depicts the creation of a distribution profile object in the manner discussed above. Next, block 78 depicts the storing of this object in association with the document in question and the process then terminates, as depicted in block 80.

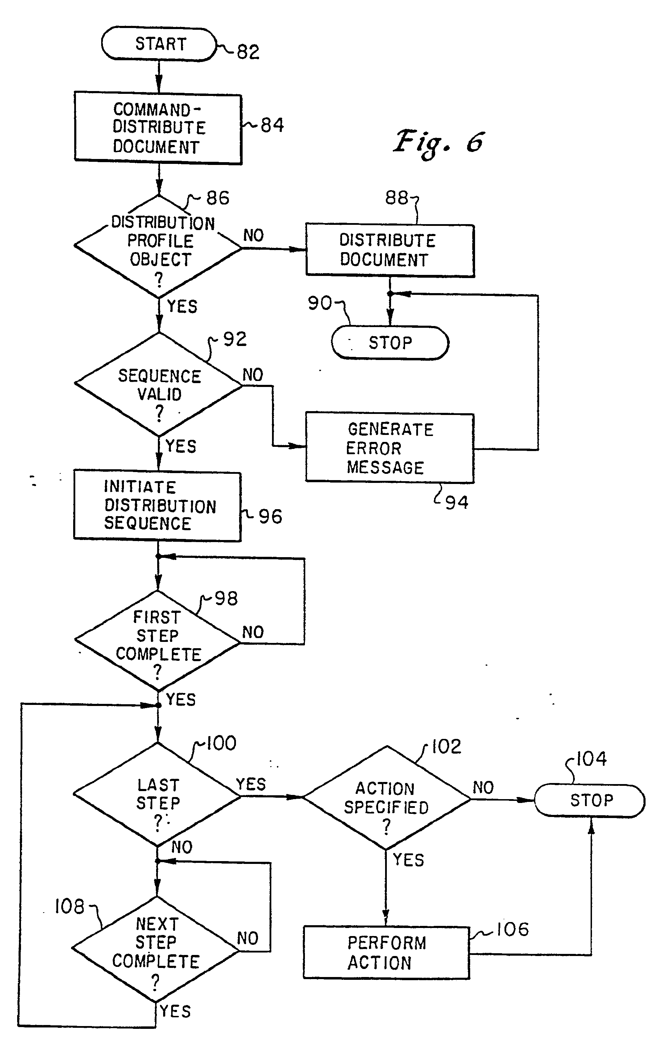

Finally, referring to Figure 6, there is depicted a high level flow chart which illustrates the distribution of a document in accordance with the method of the present invention. As is illustrated, the process begins at block 82 and thereafter passes to block 84 which depicts the receipt of a command to distribute a document. Next, block 86 illustrates a determination of whether or not a distribution profile object exists in association with this particular document. If not, block 88 illustrates the distribution of the document and the process terminates, as illustrated in block 90.

In the event a distribution profile object has been created and stored in association with the document to be distributed, as determined in block 86, then block 92 illustrates a determination of whether or not the specified sequence is valid. For example, as discussed above, the document in question may be specified for distribution from a user other than the user in control of the document at the present time. If the sequence specified is not valid, then block 94 illustrates the generation of an error message and the process again terminates, as depicted in block 90.

In the event the sequence specified within the distribution profile object is valid at the time of distribution, as determined in block 92, then block 96 depicts the initiation of the distribution sequence. Thereafter, block 98 is utilized to illustrate the determination of whether or not the first step in the distribution sequence has been completed, and if not, the process continues in an iterative fashion until such time as the first step in the distribution sequence has been completed. As utilized herein the term "step" means the completion of an action by an individual user or the completion of a process identified in the distribution profile object.

Next, block 100 is utilized to determine whether or not the completed step is the last step within the distribution sequence. If so, block 102 is utilized to depict a determination of whether or not an action has been specified for execution upon the completion of the distribution sequence. If not, the process terminates, as illustrated in block 104. However, in the event an action has been specified for execution upon the successful completion of the distribution sequence, then block 106 illustrates the performing of that action (further distribution, creation or destruction of a particular document) and the process then passes to block 104 and terminates. Those skilled in the art will appreciate that the specified action may, if desired, be performed automatically in response to the successful compilation of the distributed sequence.

In the event the step within the distribution sequence just completed is not the last step within the distribution sequence, then the process passes to block 108 which illustrates a determination of whether or not the next step within the distribution sequence has been completed. If not, the process continues iteratively until such time as the next step has been completed. In the event the next step within the distribution sequence has been completed, the process returns to block 100 to once again determine whether or not the last step in the specified distribution sequence has been completed. Thereafter, the process continues in the manner described above.

Upon reference to the foregoing those ordinarily skilled in the art that the Applicant in the present invention has created a method whereby document distribution within a distributed data processing system may be accurately specified and automatically accomplished in the specified order or sequence. Furthermore, the process of obtaining authorization from a number of addressees in a selected order prior to accomplishing a specified action with regard to a document may be easily accomplished by utilizing the method of the present invention. In this manner, many of the day to day tasks involved in the distribution and subsequent actions with regard to a particular document may be efficiently automated utilizing the method of the present invention.

While the invention has been particularly shown and described with reference to a preferred embodiment, it will be understood by those skilled in the art that various changes in form and detail may be made therein without departing from the spirit and scope of the invention.

## Claims

1. A method of document administration in a data processing system containing a plurality of documents accessible by a plurality of users within said data processing system, said method comprising the steps of:

creating a distribution profile object associated with a selected document within said data processing system;

storing within said distribution profile object a specification for the distribution of said selected documents; and

automatically distributing said selected document throughout said data processing system in accordance with said stored specification.

2. The method of document administration in a data processing system containing a plurality of documents accessible by a plurality of users within said data processing system according to Claim 1 wherein said step of storing within said distribution profile object a specification for the distribution of said selected document comprises the step of storing a selected sequence of addressees for distribution of said selected document.

3. The method of document administration in a data processing system containing a plurality of documents accessible by a plurality of users within said data processing system according to Claim 2, further including the step of specifying a particular action to take place with respect to said selected document after completion of said selected sequence of addressees for distribution of said selected document.

4. The method of document administration in a data processing system containing a plurality of documents accessible by a plurality of users within said data processing system according to Claim 2, wherein said step of storing a selected sequence of addressees for distribution of said selected document comprises the step of listing a plurality of addressees for said selected document and the order in which said plurality of addressees shall receive said selected document.

5. The method of document administration in a data processing system containing a plurality of documents accessible by a plurality of users within said data processing system according to Claim 4, wherein said step of listing a plurality of addressees for said selected document and the order in which said plurality of addressees shall receive said selected document comprises the step of determining whether a first specified addressee has received said selected document prior to distributing said selected document to a subsequent specified addressee.

Fig. 1

DOCUMENT ~40 ⟷ USER A ~44

DISTRIBUTION PROFILE ~42

USER B ~46

48⌐ USER C     USER D ⌐50

*Fig. 2*

74~ ( START )

CREATE DISTRIBUTION PROFILE OBJECT ~76

STORE PROFILE OBJECT WITH DOCUMENT ~78

80~ ( STOP )

*Fig. 5*

~52

| 54⌐ ACTION CODE | SEQUENCE REQUESTED ⌐56 | SEQUENCE AUTHORIZED ⌐58 | USER TO AUTHORIZED ⌐60 |
|---|---|---|---|

SEQUENCE CONDITION ~62

*Fig. 3*

| AUTHORIZATION ACTION : ANNOUNCEMENT ~66 | | |
|---|---|---|
| AUTHORIZING USER ⌐68 | REQUESTED ⌐70 | GRANTED ⌐72 |
| ACKERS @ DALHQIC2 | 1 | 1 |
| GUGELIOMI @ DALHQIC2 | 2 | 2 |
| MONDELLO @ MSNVM1 | 3 | |
| PALERMO @ DALHQIC1 | 3 | 3 |

*Fig. 4*        ~64

_Fig. 6_

```
                    START  ~82

                COMMAND-
                DISTRIBUTE   ~84
                DOCUMENT

                                            88
            DISTRIBUTION  ~86    NO    DISTRIBUTE
            PROFILE          ────────  DOCUMENT
            OBJECT
            ?
                YES                    90
                                          STOP
            SEQUENCE    ~92   NO
            VALID        ──────────
            ?                         GENERATE
                YES                   ERROR
                                      MESSAGE
            INITIATE                        94
            DISTRIBUTION
            SEQUENCE   ~96

            FIRST    ~98
            STEP           NO
            COMPLETE  ──────────
            ?
                YES

            LAST    ~100    YES   ACTION    102   NO    STOP  104
            STEP         ────────  SPECIFIED  ────────
            ?                     ?
                NO                     YES
                                                PERFORM
        108  NEXT           NO               ACTION   106
            STEP      ──────────
            COMPLETE
            ?
                YES
```

9